# EUROPÄISCHE PATENTSCHRIFT

(11) **EP 2 643 668 B1**
(45) Veröffentlichungstag und Bekanntmachung des Hinweises auf die Patenterteilung: **03.04.2019**
(21) Anmeldenummer: 11791439.0
(22) Anmeldetag: 25.11.2011
(51) Int. Cl.: G01K 7/02

(54) **ELEKTRISCHER STECKVERBINDER FÜR THERMOELEMENTE UND VERFAHREN ZU DESSEN HERSTELLUNG**
ELECTRIC PLUG CONNECTOR FOR THERMOCOUPLES, AND METHOD FOR PRODUCING SAME
CONNECTEUR ÉLECTRIQUE POUR THERMOÉLÉMENTS ET PROCÉDÉS DE FABRICATION CORRESPONDANTS

(30) Priorität: 26.11.2010 DE 102010052478
(43) Veröffentlichungstag der Anmeldung: 02.10.2013
(73) Patentinhaber: Phoenix Contact GmbH & Co. KG, 32825 Blomberg (DE)
(72) Erfinder: ZINK, Fabian, 32756 Detmold (DE)
(74) Vertreter: Bill, Burkart Hartmut
(86) Internationale Anmeldenummer: PCT/EP2011/005941
(87) Internationale Veröffentlichungsnummer: WO 2012/069205

(56) Entgegenhaltungen:
- EP-A1- 0 686 835
- EP-A1- 1 510 801
- IE-A1- 892 615
- US-A- 6 068 400

## Beschreibung

Die Erfindung betrifft einen elektrischen Steckverbinder zum elektrischen Anschluss von wenigstens einem ersten und einem zweiten Thermoelementleiter, umfassend wenigstens ein elektrisch leitfähiges erstes und zweites Kontaktmittel, wobei der erste Thermoelementleiter an das erste Kontaktmittel und der zweite Thermoelementleiter an das zweite Kontaktmittel anzuschließen ist.

Elektrische Steckverbinder für Thermoelemente der gattungsgemäßen Art sind an die elektrischen Leiterenden eines Thermoelements oder an eine daran angebrachte Ausgleichsleitung, üblicherweise mittels einer Klemmverbindung, elektrisch angeschlossen. Derartige Steckverbinder für Thermoelemente werden auch als Thermoelementstecker bzw. Thermostecker bezeichnet. Sie dienen beim Aufbau einer Temperaturmesskette als universelles elektrisches Anschlussmittel und zum standardisierten elektrischen Verbinden von Thermoelementen mit Messgeräten, Messschränken, elektrischen Schaltungsanordnungen oder dergleichen. Zur Kontaktierung mit einem Messgerät oder mit einer Schaltungsanordnung werden Thermoelementstecker üblicherweise in eine zum Stecker komplementäre Steckbuchse oder in eine Steckkupplung eingesteckt. Die mit dem Thermoelementstecker zu verbindende Steck- oder Kupplungsbuchse ist hierzu entweder direkt auf der Platine einer Schaltungsanordnung, beispielsweise einer elektrischen Leiterplatte oder an einem Gehäuse des Messgerätes, beispielsweise einem Mess- oder Schaltschrank, angebracht. Zur Überbrückung größerer Messstrecken kann eine Ausgleichsleitung als kostengünstige Verlängerung zwischen der Temperaturmessstelle und einem Messgerät verwendet werden, welche, in einem gewissen Temperaturbereich, vergleichbare thermoelektrische Eigenschaften wie die beiden Thermoelementleiter aufweist. Wird eine Ausgleichsleitung verwendet, so ist diese üblicherweise mit einer Verbindungsklemme versehen, an die die beiden offenen Thermoelementleiter elektrisch angeschlossen werden können, wobei der Thermoelementstecker an dem gegenüberliegenden Ende der Ausgleichsleitung angebracht ist.

Das Messprinzip von Thermoelementen zur Temperaturmessung beruht gemäß dem thermoelektrischen Effekt auf der Entstehung einer thermoelektrischen Spannung zwischen zwei jeweils an einem Ende miteinander verbundenen Drahtleitern, wenn die Verbindungsstelle eine andere Temperatur aufweist als die beiden offenen Leiterenden, an welchen die Thermospannung messbar ist. An der Temperaturmessstelle des Thermoelementes sind die beiden aus verschiedenen Werkstoffen bestehenden elektrischen Leiter, welche auch als Thermopaar bezeichnet werden, miteinander verbunden. An dem jeweils offen Ende, der so genannten Vergleichs- oder Kaltstelle, werden die beiden Thermoelementleiter mit einem Messgerät, zur Messung der thermoelektrischen Spannung, verbunden.

Um mittels eines Thermoelements aus dem gemessenen thermoelektrischen Spannungswert die Messstellentemperatur zu bestimmen, muss die Vergleichsstellentemperatur berücksichtigt werden, da die an einem Thermoelement messbare thermoelektrische Spannung von der Temperaturdifferenz zwischen der Mess- und der Vergleichsstelle abhängig ist. Infolgedessen muss die Messstellentemperatur aus dem gemessenen thermoelektrischen Spannungswert relativ zur Vergleichsstellentemperatur bestimmt werden.

Aus dem Stand der Technik sind temperaturabhängige Widerstände bekannt, welche zur Bestimmung und Kompensation der Vergleichsstellentemperatur eines Thermoelements eingesetzt werden. Ferner sind aus dem Stand der Technik Verfahren bekannt, welche mittels integrierter Schaltkreise nicht nur die thermoelektrischen Spannungswerte bestimmen, sondern auch die Vergleichstemperatur direkt kompensieren. Nachteilig an derartigen bekannten Verfahren ist jedoch, dass die Messung der Temperatur nicht direkt an der Vergleichsstelle des Thermoelements, das heißt nicht an den beiden Leiterenden des Thermoelements oder der Ausgleichsleitung erfolgt, sondern üblicherweise auf einer Schaltungsanordnung oder einer Platine, welche sich in innerhalb eines Gehäuses eines Messgeräts oder eines Messschranks befindet. Da die beiden Leiter üblicherweise an einer Klemme außerhalb des Messgeräts angebracht sind, liegt infolgedessen eine Temperaturabweichung zwischen der tatsächlichen und der gemessen Vergleichsstellentemperatur vor.

Aus der US 5,167,519 ist ein Universalverbinder mit Temperaturkompensation der Vergleichsstellentemperatur bekannt. An einen solchen Universalverbinder kann ein Thermoelementstecker mittels einer Schraubklemmverbindung elektrisch angeschlossen werden. Zur Messung bzw. zur Kompensation der Vergleichsstellentemperatur ist an einen derartigen Universalverbinder ein elektrischer Temperaturaufnehmer zwischen zwei galvanisch voneinander getrennte Kupferblöcke eingebracht, an welche mittels einer Klemmverbindung die Verbindungsstifte eines anzuschließenden Thermoelementsteckers fixiert werden können.

Der aus der Druckschrift US 5,167,519 bekannte Universalverbinder löst nicht das Problem, dass die elektrische Verbindungsstelle zwischen einem Thermoelementstecker bzw. zwischen dessen elektrischen Verbindungsstiften und einem mit einem Temperaturaufnehmer ausgestatten Universalverbinder einen nicht unwesentlichen Wärmeübergangswiderstand darstellt.

Da zwangsläufig zwischen der Messstelle des Thermoelements, das heißt am Messort, und der Vergleichsstelle, das heißt an den an dem Thermoelementstecker eines Thermoelements elektrisch angeschlossenen Leiterenden des Thermoelements, ein Temperaturgradient vorhanden ist, unterliegt die Vergleichsstelle aufgrund der wärmeleitenden Eigenschaften der beiden Thermoleiter - in Abhängigkeit davon, ob ein positiver oder negativer Temperaturgradient vorliegt - einer stetigen Wärmezu- oder abfuhr und damit einer zumindest temporären Erwärmung bzw. Abkühlung.

Des Weiteren kann über die Verbindungsstifte des Thermoelementsteckers, welche beispielsweise mit einem Universalverbinder gemäß der Druckschrift US 5,167,519 verbunden sind, ebenfalls eine stetige Wärmezu- oder Wärmeabfuhr stattfinden. Weist aber die Verbindungsstelle zwischen den elektrischen Verbindungsstiften des Thermoelementsteckers und dem Universalverbinder einen Wärmeübergangswiderstand auf, so ist ein Temperaturgradient zwischen der Temperatur an der Vergleichsstelle und der an dem Temperaturaufnehmer zu verzeichnen, weshalb die Vergleichstemperaturmessung einem Messfehler unterliegt.

Werden darüber hinaus Thermoelementstecker mit Thermoleitern unterschiedlicher Querschnitte oder Wärmeleitfähigkeiten an einem derartigen Universalverbinder angebracht, so ist aufgrund eines veränderten Wärmeleitungswiderstandes und eines infolge veränderten Temperaturgradienten ebenfalls mit einer Beeinflussung der Temperaturmessung an der Vergleichstelle zu erwarten.

Ist ferner ein an einem derartigen Universalverbinder angebrachter Thermoelementstecker Wärme- oder Kühlluftströmen, verbunden mit lokal unterschiedlichen Umgebungstemperaturen, ausgesetzt oder wird an einen derartigen Universalverbinder ein Thermoelement mit einer von der Temperatur am Temperaturaufnehmer abweichenden Ausgangstemperatur angeschlossen, beispielsweise beim Wechsel oder Austausch eines Thermoelements, so liegt ebenfalls ein Temperaturgradient zwischen dem Temperaturaufnehmer und der Vergleichsstelle vor, wodurch die Messkette einem zufälligen bzw. dynamischen Messfehler unterworfen ist.

Die IE 892 615 A1 offenbart einen elektrischen Steckverbinder zum elektrischen Anschluss von Thermoelementleitern mit einem darin eingebrachten temperaturempfindlichen Mikroschaltkreis.

Die EP 1 510 801 A1 offenbart ein Kaltstellenkompensationssystem mit einer Steckbuchse zum elektrischen Anschluss eines Thermoelement-Steckverbinders mit einem daran angeordneten Temperatursensor.

Die EP 0 686 835 A1 offenbart ein Temperaturmessgerät, welches ebenfalls eine Steckbuchse zum elektrischen Anschluss eines Thermoelement-Steckverbinders mit einem daran angeordneten Temperatursensor aufweist.

Die US 6 068 400 offenbart einen Adapter, der für die Verwendung mit einem Handmultimeter und einer Thermoelementsonde geeignet ist, der einen Temperatursensor und Eingangsanschlüsse aufweist, die für die Verbindung mit Standardthermoelementen geeignet sind. Der Erfindung liegt die Aufgabe zugrunde, vor dem Hintergrund des aufgezeigten Standes der Technik eine verbesserte Vorrichtung zur Bestimmung und Kompensation der Vergleichsstellentemperatur von Thermoelementen unter Verwendung eines Thermoelementsteckers zu ermöglichen. Des Weiteren soll die Vorrichtung einfach und günstig herzustellen sein sowie eine einfache Montagemöglichkeit bei gleichzeitiger guter Anwendbarkeit bieten.

Erfindungsgemäße Lösungen der Aufgabe sind bereits durch die Gegenstände mit den Merkmalen gemäß den anhängenden unabhängigen Ansprüchen 1 und 11 gegeben. Vorteilhafte und/oder bevorzugte Ausführungsformen und Weiterbildungen sind Gegenstand der Unteransprüche.

Wesentliche Vorteile der Erfindung und deren einzelnen Ausführungsformen oder Weiterbildungen sind demnach darin begründet, dass die auftretenden Wärmeverluste zwischen der Verbindungsstelle eines Thermoelementsteckers und einem an einem Messgerät angebrachter Gegensteckverbinder, in welchen der Thermoelementstecker einsteckt wird, die Vergleichsstellentemperaturmessung nicht beeinflussen. Des weiteren ermöglicht die Erfindung den Einsatz bzw. die Verwendung von Thermoelementen mit beliebigen Querschnitten und beliebigen Wärmeleitfähigkeiten, so dass sich eine höhere Flexibilität bei der Auswahl eines geeigneten Thermoelements ergibt, ohne dass ein Einfluss auf die Genauigkeit bei der Temperaturmessung zu befürchten ist.

Besonders vorteilhaft kann die Erfindung bei Messanwendungen eingesetzt werden, bei denen wechselnde Umgebungstemperaturen und veränderliche thermodynamische Ausgangsbedingungen die Genauigkeit der Temperaturmessung mit einem Thermoelemente beeinflussen kann, wobei diese Störeinflüsse durch die Erfindung kompensiert werden.

Die Aufgabe der Erfindung wird durch einen elektrischen Steckverbinder zum elektrischen Anschluss von wenigstens einem ersten und einem zweiten Thermoelementleiter gelöst, umfassend wenigstens ein elektrisch leitfähiges erstes und zweites Kontaktmittel, wobei der erste Thermoelementleiter an das erste Kontaktmittel und der zweite Thermoelementleiter an das zweite Kontaktmittel anzuschließen ist, wenigstens einen ersten elektrischen Temperaturaufnehmer, welcher mit einem Temperaturaufnahmebereich und mit wenigstens einem ersten und einem zweiten elektrischen Kontakt versehen ist, wobei wenigstens ein Teil des Temperaturaufnahmebereichs des ersten Temperaturaufnehmers an das erste Kontaktmittel durch eine Fügeverbindung angefügt.

Die Erfindung beruht demnach auf dem Gedanken, einen elektrischen Steckverbinder für Thermoelemente bereit zu stellen, der die Möglichkeit einer Temperaturmessung der Vergleichsstelle, das heißt die Messung der Temperatur an den beiden Enden von Thermoelementleitern, mit einschließt.

Erfindungsgemäß ist hierzu wenigstens ein Teil einer Temperaturmessstelle von wenigstens einem Temperaturaufnehmer an ein elektrisches Kontaktmittel des elektrischen Steckverbinders gefügt. An dieses und an mindestens ein weiteres elektrisches Kontaktmittel sind die Vergleichsstellen, das heißt die offenen Leiterenden von wenigstens einem ersten und einem zweiten Thermoelementleiter elektrisch anzuschließen, so dass der Temperaturaufnehmer, dessen Temperaturaufnahmebereich und die Vergleichsstellen des Thermoelements in eine unmittelbar Nähe zueinander gebracht sind, und zweckmäßig aneinandergrenzen.

Nach einem weiteren Erfindungsmerkmal umfasst der elektrische Steckverbinder wenigstens zwei elektrisch leitfähige Kontaktmittel. An diese Kontaktmittel sind die Enden von wenigstens zwei Thermoelementleitern, das heißt die Vergleichsstellen des Thermoelements, elektrisch anzuschließen. Diese Kontaktmittel dienen ebenfalls zum elektrischen Verbinden mit weiteren Kontaktmitteln, welche in einen zu dem erfindungsgemäßen elektrischen Steckverbinder komplementären Gegensteckverbinder, insbesondere in eine Steckbuchse oder eine Steckkupplung, eingebracht sind und in welchen der erfindungsgemäße Steckverbinder eingesteckt werden kann.

Gemäß der Erfindung umfasst der elektrische Steckverbinder wenigstens einen elektrischen Temperaturaufnehmer, wobei wenigstens ein Teil des Temperaturaufnahmebereichs des Temperaturaufnehmers an das erste Kontaktmittel des erfindungsgemäßen elektrischen Steckverbinders, insbesondere mit wenigstens einem Abschnitt an dessen Oberfläche, durch eine lösbare oder unlösbare Fügeverbindung gefügt, d.h. also insbesondere unmittelbar gefügt ist.

In der Praxis hat sich für die Erfindung eine Fügeverbindung als besonders vorteilhaft erwiesen, die zwischen dem ersten Kontaktmittel und dem Teil des Temperaturaufnahmebereichs des Temperaturaufnehmers, welches an dieses Kontaktmittel gefügt ist, ausschließlich den Wärmeübergang an der hierbei durch Aneinanderfügung entstehenden Grenzschicht verbessernde Schichtelemente zulässt, wie beispielsweise Wärmeleitpasten oder andere für die Wärmeleitung vorteilhafte mechanische Schichtelemente, und/oder für die Fügeverbindung notwendige Fügemittel, wie beispielsweise Klebstoffe, Schweiß- oder Lötmittel, Schraub- oder Nietverbindungen, zulässt, und/oder Mittel zulässt, welche eine elektrische Isolation ermöglichen, so dass der Temperaturaufnahmebereich des Temperaturaufnehmers von dem Kontaktmittel galvanisch getrennt ist.

Unter einem Temperaturaufnehmer ist jeder Messaufnehmer zu verstehen, welcher mit einem Temperaturaufnahmebereich versehen ist, und zur Messung der Oberflächentemperatur an wenigstens einem Kontaktmittel des erfindungsgemäßen Steckverbinders geeignet ist. Der Temperaturaufnehmer und der Temperaturaufnahmebereich kann eine beliebige Gestalt und eine beliebig große Messfläche aufweisen. So kann der Temperaturaufnahmebereich des Temperaturaufnehmers entweder nur einen Teil oder einen Abschnitt der Gesamtoberfläche des Temperaturaufnehmers einnehmen, oder der Temperaturaufnahmebereich wird durch die gesamte äußere Oberfläche des Temperaturaufnehmers ausgebildet. Ferner kann mindestens ein Teil des einen Temperaturaufnehmers oder mindestens ein Teil von weiteren Temperaturaufnehmern von einer Schutzschicht und/oder von einer wärmeleitfähigen Materialschicht, insbesondere von einer Keramik, umgeben sein, welche in diesem Fall mindestens einen Teil des Temperaturaufnahmebereichs des Temperaturaufnehmers ausbildet.

Erfindungsgemäß ist der wenigstens eine elektrische Temperaturaufnehmer mit wenigstens einem ersten und einem zweiten elektrischen Kontakt versehen. Dieser Temperaturaufnehmer dient zum Abgriff eines elektrischen Kennwertes, insbesondere eines temperaturveränderlichen Widerstandswertes. Hierzu kann an die beiden elektrischen Kontakte des Temperaturaufnehmers eine elektrische Spannung angelegt werden, welche von einer Schaltungsanordnung, zur Auswertung der mit dem Temperaturaufnehmer gemessenen Temperatur, gespeist wird.

Sofern der erfindungsgemäße elektrische Steckverbinder in einem Steckverbindergehäuse beherbergt wird, so sind die elektrischen Kontaktmittel vorteilhaft in einem derartigen Steckverbindergehäuse eingebracht. In vorteilhafter Ausgestaltung sind ferner der Temperaturaufnehmer und der Temperaturaufnahmebereich innerhalb des Steckverbindergehäuses beherbergt.

Die durch die Erfindung erreichbare messtechnische Verbesserung wird durch die thermodynamisch im Wesentlichen ideale Anordnung des Temperaturaufnahmebereichs des Temperaturaufnehmers an wenigstens einem ersten Kontaktmittel des erfindungsgemäßen elektrischen Steckverbinders erreicht. So sind die an das erste und zweite Kontaktmittel elektrisch angeschlossene Leiterenden eines Thermoelements, das heißt die Vergleichsstelle des Thermoelements, in unmittelbare Nähe zu dem an das wenigstens eine erste Kontaktmittel angebrachten Temperaturaufnehmer bzw. dessen Temperaturaufnahmebereich angeordnet, wodurch die aus dem Stand der Technik bereits erwähnten wärmetechnischen Nachteile bei der Vergleichstellentemperaturmessung an einem Thermoelement ausgeschlossen sind und daher eine fehlerlose Messkette bei der Verwendung eines Thermoelements mit einem daran angebrachten Thermoelementstecker geschaffen ist.

Ein derartiger erfindungsgemäßer elektrischer Steckverbinder ermöglicht ferner einen universellen und flexiblen Einsatz von Thermoelementen an wechselnden Messorten mit unterschiedlichen Umgebungstemperaturen bei gleichzeitiger sofortiger Einsatzbereitschaft der Messkette, ohne dass dynamisch Messfehler aufgrund von Temperaturangleichungen an den elektrischen Anschlüssen der Messkette zu berücksichtigt sind.

Ferner können an einen erfindungsgemäßen Steckverbinder beliebigen Thermoelementtypen mit beliebigen Materialkombinationen, Querschnitten und beliebigen Wärmeleitfähigkeiten bzw. einer beliebiger thermodynamischer Charakteristik angeschlossen werden, so dass sich eine höhere Flexibilität bei der Auswahl eines für die jeweilige Messanwendung geeigneten Thermoelements ergibt, ohne dass ein Einfluss auf die Genauigkeit oder die Fehlertoleranz bei der Temperaturmessung zu erwarten ist.

Darüber hinaus wird durch die Erfindung eine verbesserte Flexibilität bei der Auswahl eines geeigneten Temperaturaufnehmers zur Vergleichsstellentemperaturmessung erzielt. Während die aus dem Stand der Technik bekannten Messverfahren zur Bestimmung der Vergleichsstellentemperatur aufgrund der Integration der Temperaturaufnehmern in Messgeräten, auf Schaltungsanordnungen, oder in Universalsteckverbindern zum Einstecken von Thermoelementsteckern keinen Wechsel des Temperaturaufnehmers erlauben, kann mit dem erfindungsgemäßen Steckverbinder eine flexible Anpassung an die messtechnische Aufgabe erfolgen. So können für messtechnische Spezialanwendungen elektrische Steckverbinder mit Temperaturaufnehmern zum Einsatz kommen, welche besondere Eigenschaften, beispielsweise geringe Messtoleranzen oder hohe Messgeschwindigkeiten, erfordern. Weiterhin kann die messtechnische elektronische Ausrüstung, das heißt vorhandene Messgeräte und Messperipherie, die Verwendung von Temperaturaufnehmern mit besonderen elektronischen Voraussetzungen erfordernd, so dass sich diesbezüglich eine besonders vorteilhafte Flexibilität bei der Abstimmung der messtechnische Ausrüstung auf die messtechnischer Aufgabe ergeben, indem verschiedene elektrische Steckverbinder, gemäß der Erfindung, für unterschiedliche messtechnische Anforderungen zur Verfügung stehen.

Weitere wirtschaftliche Vorteile der Erfindung ergeben sich aus der Möglichkeit Messgeräte ohne integrierte Temperaturaufnehmer zur Vergleichstellentemperaturmessung verwenden zu können, weshalb universale Messgeräte zum Einsatz kommen können und wodurch sich eine Kosteneinsparung ergibt.

Gemäß der Erfindung ist wenigstens ein Teil des Temperaturaufnahmebereichs des Temperaturaufnehmers an das erste und an das zweite Kontaktmittel des erfindungsgemäßen elektrischen Steckverbinders durch eine Fügeverbindung angefügt. Hierdurch wird in besonders vorteilhafter Weise erreicht, dass die Vergleichstemperaturmessung an dem ersten und an dem zweiten Kontaktmittel gleichzeitig mittels eines einzigen Temperaturaufnehmers erfolgen kann und, dass zwischen dem ersten und dem zweiten Kontaktmittel ein Wärmeaustausch erfolgt.

In besonders vorteilhafter Ausgestaltung der Erfindung weist der Temperaturaufnahmebereich wärmeleitende Eigenschaften auf. Um den Wärmeübergang zwischen dem Temperaturaufnahmebereich des Temperaturaufnehmers und dem ersten und zweiten galvanisch von einander zu trennenden Kontaktmitteln zu erreichen ist zwischen die Verbindungsstelle, das heißt zwischen dem Teil des Temperaturaufnahmebereichs des Temperaturaufnehmers der an das erste Kontaktmittel und/oder der Teil des Temperaturaufnahmebereichs des Temperaturaufnehmers der an das zweite Kontaktmittel angefügt ist, ein den Wärmeübergang verbesserndes Mittel, insbesondere eine Wärmeleitpaste oder ein wärmeleitender Klebstoff, oder ein die Wärmeleitung verbesserndes Element eingebracht. Hierdurch wird in vorteilhafter Weise erreicht, dass die Wärmeleitung an der Grenzschicht der Fügeverbindung verbessert ist.

Ferner kann die Fügeverbindung Mittel umfassen, welche die elektrische Isolation ermöglicht, so dass der Temperaturaufnahmebereich des Temperaturaufnehmers von dem ersten und/oder zweiten Kontaktmittel galvanisch getrennt ist.

In einer anderen bevorzugten Ausführungsform der Erfindung ist wenigstens ein Teil des Temperaturaufnahmebereichs des ersten Temperaturaufnehmers an das erste Kontaktmittel und ein Teil des Temperaturaufnahmebereichs eines zweiten Temperaturaufnehmers an das zweite Kontaktmittel durch eine Fügeverbindung aneinander gefügt. Hierdurch ergibt sich der Vorteil einer getrennten Temperaturerfassung mittels von zwei Temperaturaufnehmern an dem ersten und zweiten Kontaktmittel und einer zwangsläufigen galvanischen Trennung der beiden Kontaktmittel.

In weiterer Ausgestaltung der Erfindung ist der erfindungsgemäße elektrische Steckverbinder mehrpolig ausgeführt und weist neben dem ersten und dem zweiten ein elektrisch leitfähiges drittes Kontaktmittel auf, welches ebenfalls innerhalb eines Steckverbindergehäuses angeordnet sein kann.

In weiterer vorteilhafter Ausgestaltung der Erfindung ist der erste elektrische Kontakt des Temperaturaufnehmers an dem dritten Kontaktmittel und der zweite elektrische Kontakt des Temperaturaufnehmers an das erste oder an das zweite Kontaktmittel elektrisch angeschlossen. Aufgrund einer derartigen Anordnung der elektrischen Kontakte des Temperatursensors ist somit ein elektrischer Steckverbinder geschaffen, der neben der Messung der Vergleichsstellentemperatur an den an den Steckverbinder an dessen ersten und zweiten Kontaktmitteln elektrisch angeschlossenen Thermoelementleitern auch einen elektrischen Anschluss der elektrischen Kontakte des die Vergleichsstellentemperatur erfassenden Temperaturaufnehmers ermöglicht. Ein derartiger dreipoliger elektrischer Steckverbinder ermöglicht somit neben der elektrischen Übertragung der an den Thermoelementleiterenden vorliegenden thermoelektrischen Spannung auch die elektrische Übertragung der elektrisch erfassten Kenngröße des Temperaturaufnehmers an eine elektrische Schaltungsanordnung, beispielsweise an ein Temperaturinterface in einem Messgerät, welches in der Lage ist, den thermoelektrischen Spannungswert sowie die elektrische Kenngröße des Temperaturaufnehmers auszuwerten. Hierzu ist das Messgerät oder die elektrische Schaltungsanordnung mit einem zu dem erfindungsgemäßen elektrischen Steckverbinder komplementären, ebenfalls dreipoligen, elektrischen Gegensteckverbinder, beispielsweise einer elektrischen Steckbuchse oder einer Steckkupplung, ausgestattet.

Zweckmäßig ist der erfindungsgemäße elektrische Steckverbinder in einer weiteren vorteilhaften Ausgestaltung der Erfindung mit einem vierten elektrisch leitfähigen Kontaktmittel versehen sein, welches ebenfalls innerhalb eines Steckverbindergehäuses angeordnet ist. Bei einer solchen Ausführungsform der Erfindung ist der zweite elektrische Kontakt eines ersten Temperaturaufnehmers nicht an das erste oder an das zweite sondern an das zusätzliche, vierte Kontaktmittel elektrisch angeschlossen, wodurch sich der Vorteil einer galvanischen Trennung des ersten und zweiten Kontakts des Temperaturaufnehmers von dem ersten oder zweiten Kontaktmittel des erfindungsgemäßen elektrischen Steckverbinders und damit von dem thermoelektrischen Spannungssignal ergibt.

Sofern der erfindungsgemäße elektrische Steckverbinder mit einem ersten und einem zweiten Kontaktmittel versehen ist, kann der erfindungsgemäße Steckverbinder in weiterer Ausgestaltung der Erfindung ein fünftes und sechstes elektrisch leitfähiges Kontaktmittel umfassen, an welche der elektrische erste und zweite Kontakt des zweiten Temperaturaufnehmers jeweils galvanisch getrennt angeschlossen ist. Dieses fünfte und sechste elektrisch leitfähige Kontaktmittel kann ebenfalls innerhalb eines Steckverbindergehäuses beherbergt sein, wodurch ein sechspoliger Thermoelementstecker geschaffen ist, welcher mit zwei Temperaturaufnehmern zur getrennten Erfassung der Vergleichsstellentemperaturen an einem an den Steckverbinder angeschlossenen Thermoelement ausgelegt ist und bei welchem eine vollständige galvanische Trennung der einzelnen Kontaktmittel vorliegt.

Zur Erfassung der Vergleichsstellentemperatur eignen sich bevorzugt elektrische Temperaturaufnehmer, welche als temperaturabhängige Widerstände ausgebildet sind. Bevorzugte temperaturabhängige Widerstände sind insbesondere Heiß- oder Kaltleiter, wobei erfindungsgemäß uneingeschränkt alle bekannten Typen von elektrischen Temperaturaufnehmern oder Temperaturmessvorrichtungen verwendet werden können. Zweckmäßig ist der Temperaturaufnahmebereich des ersten Temperaturaufnehmer und auch von weiteren Temperaturaufnehmern wärmeleitend ausgebildet. Ferner kann der Temperaturaufnahmebereich von einer wärmeleitfähigen Keramik oder einem Keramikkörper von welcher der Temperaturaufnehmer ganz oder teilweise umhüllt oder beschichtet ist, ausgebildet sein, wobei das keramische Material bevorzugt als elektrischer Isolator ausgebildet ist.

In vorteilhafter Ausgestaltung der Erfindung ist das erste und zweite Kontaktmittel mittels eines keramischen Verbindungselements oder mittels eines aus einem anderen wärmeleitenden Materials bestehenden Elements wärmeleitend verbunden, so dass ein Temperaturausgleich zwischen dem ersten und dem zweiten Kontaktmittel stattfinden kann. In oder auf ein derartiges Verbindungselement können ein oder mehrere Temperaturaufnehmer zur Messung der Temperatur des Verbindungselements befestigt sein.

In besonders vorteilhafter Ausgestaltung der Erfindung wird ein mit einer keramischen oder einer anderen wärmeleitenden Umhüllung versehener Temperaturaufnehmer mittels einer Fügeverbindung an das erste und das zweite Kontaktmittel angefügt. Zur galvanischen Trennung des ersten und zweiten Kontaktmittels ist das den Temperaturaufnehmer umhüllende Material ein elektrischer Isolator.
Zur Herstellung eines erfindungsgemäßen elektrischen Steckverbinders für Thermoelemente wird zumindest ein Teil des Temperaturaufnahmebereichs eines ersten Temperaturaufnehmers mittels eines Fügeverfahrens an das erste Kontaktmittel angefügt.

In weiterer Ausgestaltung der Erfindung wird zumindest ein Teil des Temperaturaufnahmebereichs des ersten Temperaturaufnehmers mittels eines stoffschlüssigen Fügeverfahrens, insbesondere mit einer Klebeverbindung, an das erste Kontaktmittel angefügt.

Zweckmäßig wird zur Herstellung der Fügeverbindung ein Klebeverfahren angewendet. In besonders vorteilhafter Ausgestaltung wird zumindest eine Teil des Temperaturaufnahmebereichs oder ein Teil der Oberfläche einer Umhüllung eines Temperaturaufnehmers und/oder ein Teil des ersten und zweiten Kontaktmittels des elektrischen Steckverbinders mit epoxidharzhaltigem Zweikomponenten-Klebstoff benetzt und anschließend der mit Klebstoff benetzte Teil des Temperaturaufnehmers an das erste und zweite Kontaktmittel gefügt.

Zweckmäßig ist in besonderer Ausgestaltung der Erfindung, zur Verbesserung der wärmeleitfähigen Eigenschaften der Fügeverbindung, der Klebstoff mit einem die Wärmeleitfähikeit erhöhenden Zusatzmittel versehen. Weiterhin wird zuerst zumindest ein Teil der Oberfläche des Temperaturaufnahmebereichs des ersten Temperaturaufnehmers mit einer Wärmeleitpaste und/oder mit einem die Wärmeleitfähigkeit verbessernden und/oder einem eine galvanische Trennung herstellenden Element versehen und anschließend der Temperaturaufnahmebereich des Temperaturaufnehmers mittels eines Fügeverfahrens, beispielsweise mittels eines Klebeverfahrens, einer Schweiß- oder Lötverbindung oder einer Schraub- oder Nietverbindung an das erste und/oder an weitere Kontaktmitteln angefügt.

Der erfindungsgemäße elektrische Steckverbinder für Thermoelemente ist nachfolgend in bevorzugten Ausführungsbeispielen beschrieben. In der Zeichnung zeigen:
- Fig. 1:: eine schematische Ansicht eines elektrischen Steckverbinders und einem Temperaturaufnehmer,
- Fig. 2:: eine Skizze eines Thermoelements mit einem dreipoligen elektrischen Steckverbinder in einer Steckbuchse auf einer elektrischen Schaltungsanordnung in perspektivischer Ansicht,
- Fig. 3:: eine Skizze eines geöffneten dreipoligen elektrischen Steckverbinders mit einem Temperaturaufnehmer
- Fig. 4:: eine Skizze eines geöffneten vierpoligen elektrischen Steckverbinders mit einem Temperaturaufnehmer
- Fig. 5:: ein elektrischer Steckverbinder und zwei Temperaturaufnehmern in schematischer Ansicht,
- Fig. 6:: ein der Skizze nach Fig. 2 entsprechendes Thermoelement mit einem dreipoligen elektrischen Steckverbinder in einer Steckbuchse auf einer elektrischen Schaltungsanordnung in perspektivischer Ansicht,
- Fig. 7:: ein der Skizze nach Fig. 3 entsprechender, geöffneter dreipoliger elektrischer Steckverbinder mit einem Temperaturaufnehmer,
- Fig. 8:: ein der Skizze nach Fig. 4 entsprechender, geöffneter vierpoliger elektrischer Steckverbinder mit einem Temperaturaufnehmer.

Bevor nachfolgend auf die in den Figuren dargestellten bevorzugte Ausführungsbeispiele eingegangen wird, sei darauf hingewiesen, dass ein Steckverbinder gemäß der Erfindung mit oder auch ohne Steckverbindergehäuse ausgebildet sein kann.

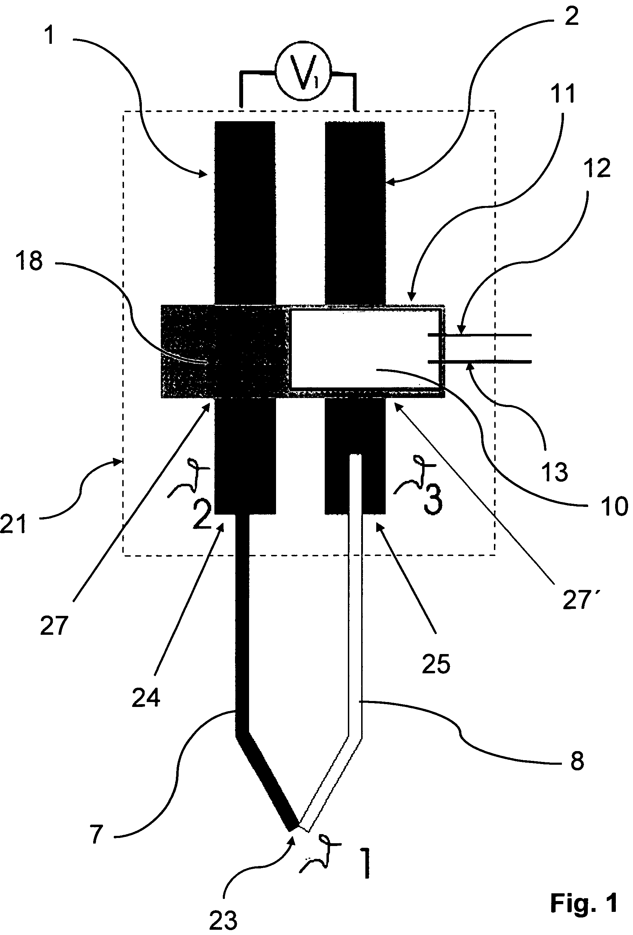

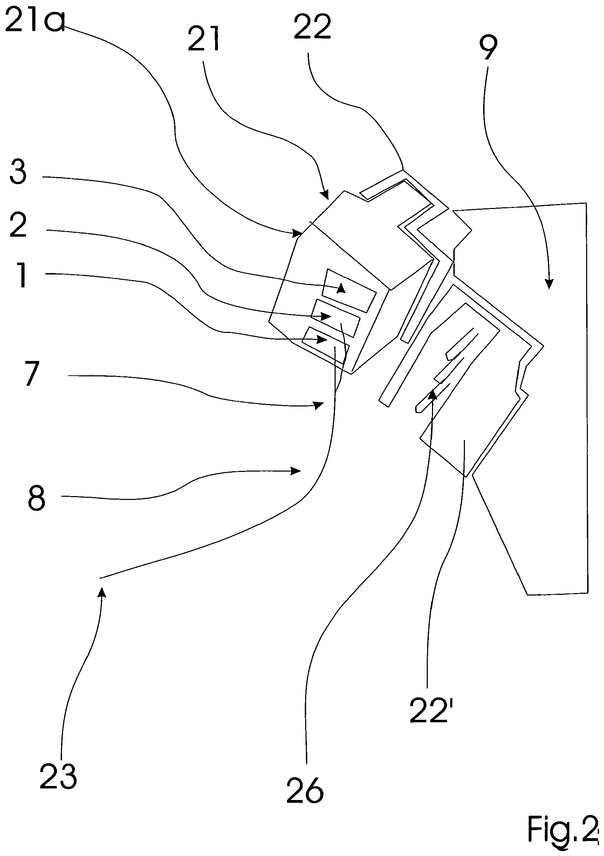

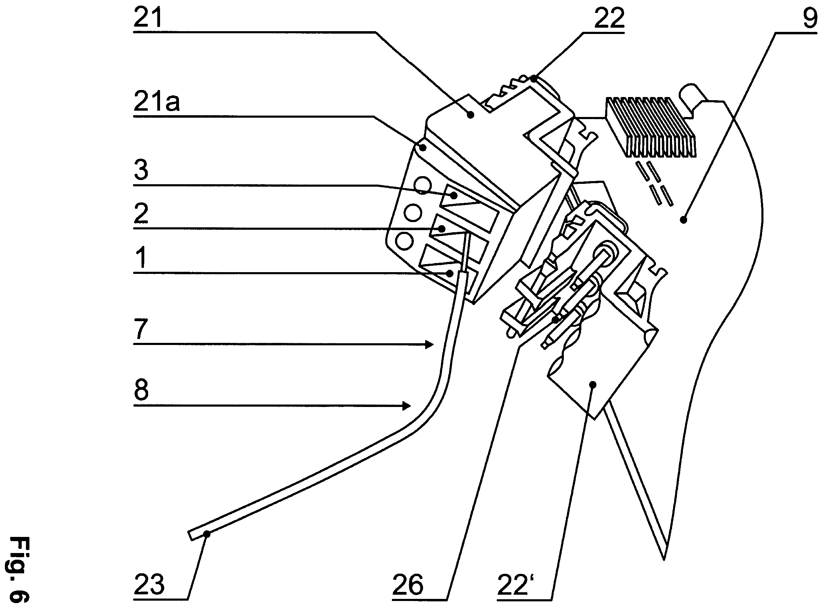

Fig. 1 zeigt eine schematische Ansicht eines elektrischen Steckverbinders gemäß der Erfindung anhand eines Ausführungsbeispiels, bei welchem der Steckverbinder ein Steckverbindergehäuse 21 besitzt. Ein erstes und zweites elektrisches Kontaktmittel 1 und 2 sind in diesem Fall somit zweckmäßig innerhalb des Steckverbindergehäuses 21 angeordnet, welches mit der gestrichelten Umrahmung veranschaulicht ist. Die Kontaktmittel 1 und 2 sind im Ausführungsbeispiel Stiftartig für einen als Stecker ausgebildeten Steckverbinder ausgebildet. Es sei jedoch darauf hingewiesen, dass die Kontaktmittel 1 und 2 auch buchsenartig für einen als Buchse ausgebildeten Steckverbinder ausgebildet sein können. An jeweils einem Ende des ersten und zweiten elektrischen Kontaktmittels 1 und 2 sind die beiden Thermoelementleiter 7 und 8 eines Thermoelements elektrisch angeschlossen, wobei diese an der Messstelle 23, zur Messung einer Temperatur ϑ1 an einem entfernt liegenden Messort, aneinander gefügt sind. An den jeweils anderen Ende des ersten und des zweiten elektrischen Kontaktmittels 1 und 2 des elektrischen Steckverbinders kann eine thermoelektrische Spannung V1 abgegriffen und, wie z.B. in den Fig. 2 und Fig.6 zu sehen, auf eine Schaltungsanordnung 9 übertragen werden, indem der elektrische Steckverbinder mit einem komplementären, auf der Schaltungsanordnung 9 angebrachten Steckverbinder gepaart wird.

Zur Messung einer Vergleichsstellentemperatur ϑ2, bezogen auf die Temperatur ϑ1, an einer Vergleichsstelle 24 des ersten Thermoelementleiters 7 ist ein Teil eines Temperaturaufnahmebereichs 11 eines Temperaturaufnehmers 10 an das erste Kontaktmittel 1 angefügt.

Zur Messung einer weiteren Vergleichsstellentemperatur ϑ3, bezogen auf die Temperatur ϑ1, an einer Vergleichsstelle 25 des zweiten Thermoelementleiters 8 ist ein Teil eines Temperaturaufnahmebereichs 11 dieses Temperaturaufnehmers 10 auch an das zweite Kontaktmittel 2 angefügt.

Der Temperaturaufnehmer 10, ist zumindest teilweise mit einem Keramikkörper 18 umhüllt, wodurch der Temperaturaufnahmebereich 11, des Temperaturaufnehmers 10 durch einen Teil des umhüllenden Keramikkörpers 18 ausgebildet wird. Die Oberfläche der Temperaturaufnahmebereich 11 in Fig.1 zeigt somit in die Zeichenebene hinein. Ein Teil des Temperaturaufnahmebereichs 11 ist mittels einer Fügeverbindung 27, an das erste Kontaktmittel 1 und ein weiterer Teil des Temperaturaufnahmebereichs 11 ist mittels einer Fügeverbindung 27' an das zweite Kontaktmittel 2 wärmeleitend angefügt, wodurch ein Temperaturausgleich zwischen dem ersten und dem zweiten Kontaktmittel stattfinden kann, d.h. also insbesondere auch unmittelbar angefügt.

Die Fügeverbindungen sind zweckmäßig Klebeverbindungen. Zum Abgriff des elektrischen Temperaturkennwertes der Vergleichsstellentemperaturmessung mit dem Temperaturaufnehmer 10 sind im vorliegenden Beispiel somit dessen beide elektrischen Kontakte 12 und 13 aus dem Steckverbindergehäuse 21 heraus geführt.

Fig.2 und Fig.6 zeigen in perspektivischer Ansicht ein bevorzugtes Ausführungsbeispiel eines erfindungsgemäßen dreipoligen elektrischen Steckverbinders und ein daran elektrisch angeschlossenes Thermoelement mit zwei Thermoelementleitern 7 und 8, welche an der Messstelle 23 des Thermoelements miteinander elektrisch verbunden sind.

Der in den Fig.2 und Fig.6 veranschaulichte elektrische Steckverbinder ist wiederum in einem Steckverbindergehäuse 21 mit einem Gehäusedeckel 21a eingebracht. Ein erster elektrischer Temperaturaufnehmer 10, zur Messung der Vergleichsstellentemperatur, ist ebenfalls innerhalb des Steckverbindergehäuses 21 angeordnet. Der Steckverbinder ist als elektrischer Stecker ausgeführt und in eine elektrische Steckbuchse 22 eingesteckt, welche auf einer Schaltungsplatine mit einer elektrischen Schaltungsanordnung 9 angeordnet ist.

Im Gegensatz zum Steckverbinder nach Fig. 1, weist das Steckverbindergehäuse 21 des elektrischen Steckverbinders drei Zugangsöffnungen zu drei, d.h. einem ersten, einem zweiten und einem dritten Kontaktmittel 1, 2, 3 auf, welche innerhalb des Steckverbindergehäuses 21 eingebracht sind und daher nicht sichtbar sind. An dem in den Fig. 2 und Fig. 6 gezeigten elektrischen Steckverbinder ist das Thermoelement mit zwei Thermoelementleitern 7 und 8 an das erste bzw. das zweite Kontaktmittel elektrisch angeschlossen, wobei zu diesem Zweck die beiden Thermoelementleitern 7 und 8 jeweils durch die erste und die zweite Zugangsöffnung in dem Steckverbindergehäuse 21 geführt sind.

Die Steckbuchse 22 weist komplementäre Kontaktmittel auf, die aufgrund der Paarung nicht sichtbar sind, und die Herstellung eines elektrischen Kontaktes mit dem ersten, dem zweiten und dem dritten Kontaktmittel 1, 2, 3 des elektrische Steckverbinders gestatten, wenn der Steckverbinder in die Steckbuchse 22 eingesteckt ist.

Die elektrische Schaltungsanordnung 9 dient zur Verarbeitung bzw. zur Auswertung des thermoelektrischen Spannungswertes und des von dem ersten elektrischen Temperaturaufnehmer 10 erzeugten Temperaturkennwertes. Beide Messwerte werden mittels des elektrischen Steckverbinders auf die elektrischen Schaltungsanordnung 9 übertragen. In den Fig. 2 und Fig. 6 ist ferner eine weitere, unbelegte Steckbuchse 22', im vorliegenden Fall mit drei stiftartigen Kontaktmitteln 26, zum Anschluss eines weiteren elektrischen Steckverbinders gemäß der Erfindung zu erkennen, welche auf der Schaltungsplatine angeordnet und ebenfalls mit der Schaltungsanordnung 9 elektrisch verbunden ist.

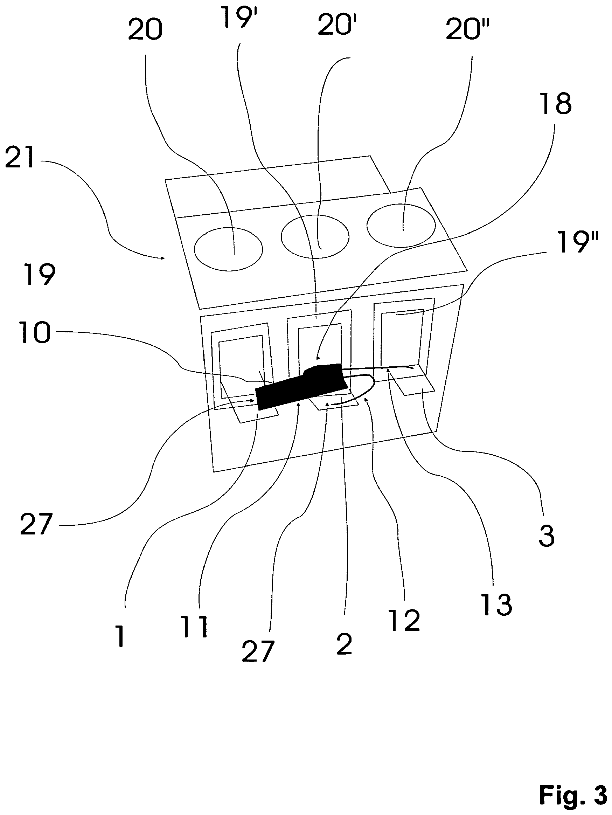

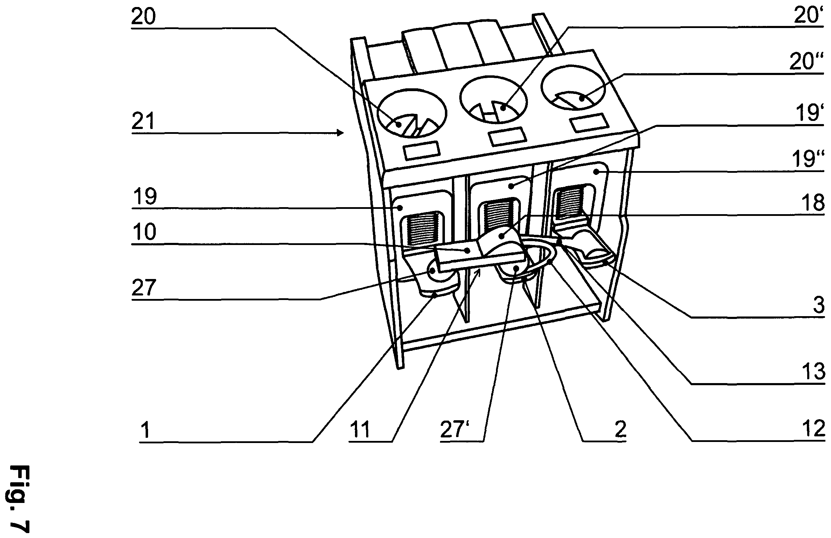

Fig.3 und Fig.7 zeigen das geöffnete Steckverbindergehäuse 21 des in Figur 2 dargestellten dreipoligen elektrischen Steckverbinders mit einem ersten, einem zweiten und einem dritten Kontaktmittel 1, 2, 3, welche innerhalb des Steckverbindergehäuses 21 eingebracht sind. Ein evtl. vorhandener Gehäusedeckel 21b des Steckverbindergehäuses 21 ist in den Fig.3 und Fig.7 nicht sichtbar.

An das erste und das zweite Kontaktmittel des in den Fig. 3 und Fig.7 dargestellten Steckverbinders können zwei Thermoelementleiter 7 und 8 elektrisch angeschlossen werden, wobei das zweite Kontaktmittel ferner zum elektrischen Anschluss eines ersten elektrischen Kontaktes 12 eines Temperaturaufnehmers 10 dient. Somit sind an das zweite Kontaktmittel zwei elektrische Kontaktelemente angeschlossen, zum einen der zweite Thermoelementleiter 8 und zum anderen der erste elektrische Kontakt 12 des Temperaturaufnehmers 10. Das dritte Kontaktmittel dient zum elektrischen Anschluss eines zweiten elektrischen Kontaktes 13 des Temperaturaufnehmers 10.

Zum elektrischen Anschluss der zwei Thermoelementleiter 7 und 8 an das erste und zweite Kontaktmittel 1 und 2 sind die beiden Kontaktmittel 1, 2 in dem in den Fig. 3 und Fig.7 gezeigten Ausführungsbeispiel jeweils mit Schraubenklemmen 19 und 19' versehen. In diese können die beiden Thermoelementleiter 7 und 8 jeweils eingeführt und mittels einer Klemmschraube 20 bzw. 20' angeklemmt werden.

Der elektrische Temperaturaufnehmer 10 ist zumindest teilweise von einem Keramikkörper 18 umhüllt und definiert hierdurch wiederum einen Temperaturaufnahmebereich 11 des Temperaturaufnehmers 10. Zum Zweck der Messung der Vergleichsstellentemperaturen an den Leiterenden eines an den Steckverbinder elektrisch angeschlossenen Thermoelements ist an das erste und an das zweite Kontaktmittel 1 und 2 jeweils ein Teil des Temperaturaufnahmebereichs 11 des elektrischen Temperaturaufnehmers 10 mittels der Klebeverbindungen 27 bzw. 27' angefügt. Zum Abgriff des elektrischen Temperaturkennwertes sind die zwei elektrischen Kontakte 12 und 13 des Temperaturaufnehmers 10 mit dem zweiten und dem dritten Kontaktmittel 2 und 3 verlötet.

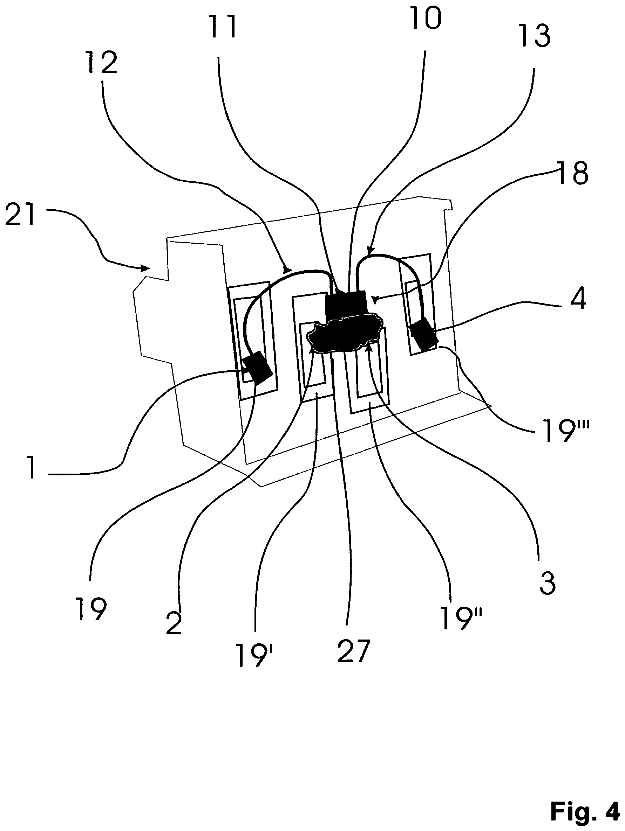

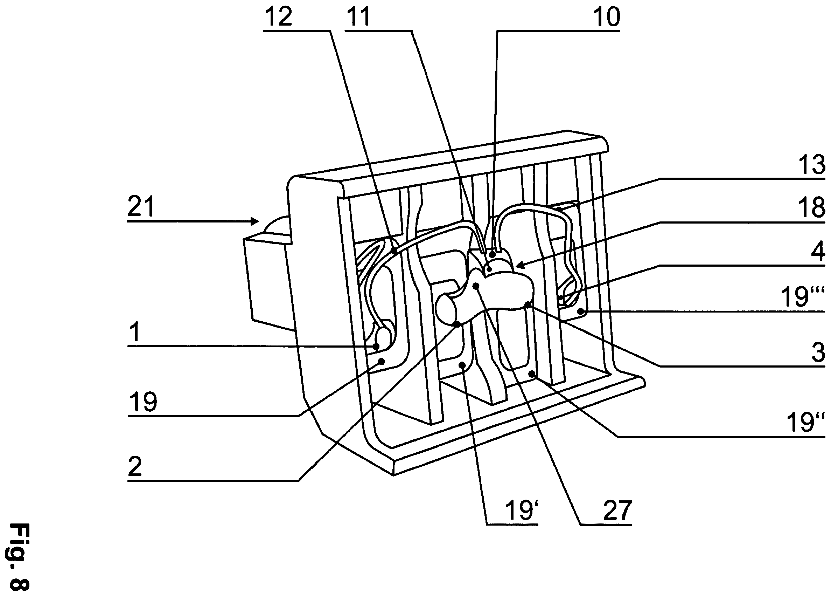

Fig.4 und Fig.8 zeigen das geöffnete Steckverbindergehäuse 21 eines Ausführungsbeispiels eines vierpoligen elektrischen Steckverbinders mit einem ersten, einem zweiten, einem dritten und einem vierten Kontaktmittel 1, 2, 3, 4, welche innerhalb eines Steckverbindergehäuses 21 eingebracht sind. Ein Gehäusedeckel 21b des Steckverbindergehäuses 21 ist in den Fig.4 und Fig.8 nicht sichtbar.

An das zweite und dritte Kontaktmittel können zwei Thermoelementleiter 7 und 8 elektrisch angeschlossen werden, während das erste Kontaktmittel zum elektrischen Anschluss eines ersten elektrischen Kontaktes 12 eines Temperaturaufnehmers 10, und das vierte Kontaktmittel zum elektrischen Anschluss eines ersten elektrischen Kontaktes 13 des Temperaturaufnehmers 10 dient. Somit ist eine galvanische Trennung der Messsignale der thermoelektrischen Spannung, mit dem Thermoelement, und dem zur Messung der Vergleichsstellentemperatur analogen Messsignal, mit dem Temperaturaufnehmer 10, erreicht.

Zum elektrischen Anschluss der zwei Thermoelementleiter 7 und 8 an das zweite und dritte Kontaktmittel 2 und 3 sind die beiden Kontaktmittel 2 und 3 in dem in den Fig. 4 und Fig.8 gezeigten Ausführungsbeispiel jeweils mit den Schraubenklemmen 19' und 19'' versehen. In diese können die beiden Thermoelementleiter 7 und 8 jeweils eingeführt werden und jeweils mittels einer Klemmschraube (in Fig. 4 und Fig.8 nicht sichtbar) angeklemmt werden.

Zum Zweck der Messung der Vergleichsstellentemperaturen an den Leiterenden eines an den Steckverbinder elektrisch angeschlossenen Thermoelements ist an das zweite und an das dritte Kontaktmittel 2 und 3 jeweils ein Teil eines Temperaturaufnahmebereichs 11 des elektrischen Temperaturaufnehmers 10 mittels der Klebeverbindungen 27 bzw. 27' angefügt, wobei der Temperaturaufnahmebereich 11 des Temperaturaufnehmers 10 ebenfalls wiederum von einem den Temperaturaufnehmer 10 in zweckmäßiger Weiterbildung zumindest teilweise umhüllenden Keramikkörper 18 ausgebildet ist. Zum Abgriff des elektrischen Temperaturkennwertes sind die zwei elektrischen Kontakte 12 und 13 des Temperaturaufnehmers 10 mit dem ersten und dem vierten Kontaktmittel 1 und 4 verlötet.

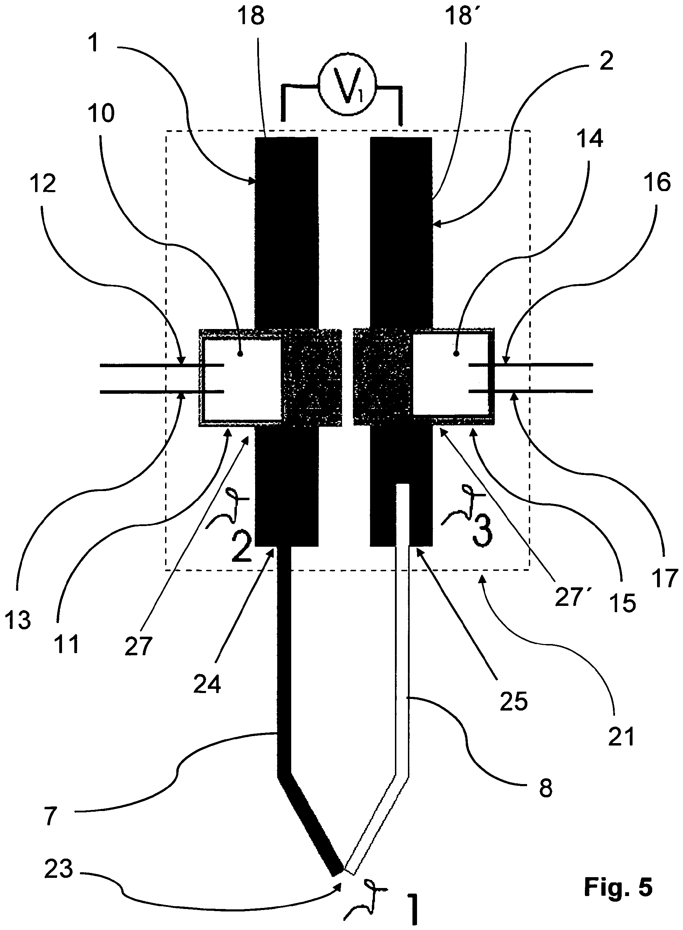

Fig. 5 zeigt eine schematische Ansicht einer Ausführungsform eines elektrischen Steckverbinders mit einem ersten Temperaturaufnehmer 10 und einem zweiten Temperaturaufnehmer 14 anhand eines Ausführungsbeispiels. Ein erstes und ein zweites elektrisches Kontaktmittel 1 und 2 sind innerhalb eines Steckverbindergehäuses 21 angeordnet, welches mit der gestrichelten Umrahmung veranschaulicht ist.

An jeweils einem Ende des ersten und zweiten elektrischen Kontaktmittels 1 und 2 sind die beiden Thermoelementleiter 7 und 8 eines Thermoelements elektrisch angeschlossen, wobei diese an der Messstelle 23, zur Messung einer Temperatur ϑ1 an einem entfernt liegenden Messort, aneinander gefügt sind. An den gegenüberliegenden Enden des ersten und des zweiten elektrischen Kontaktmittels 1 und 2 des elektrischen Steckverbinders kann eine thermoelektrische Spannung V1 abgegriffen und auf eine Schaltungsanordnung 9 übertragen werden, indem der elektrische Steckverbinder in einen Steckbuchse 22, welche auf einer Schaltungsanordnung 9 angebracht ist, eingesteckt wird.

Zur Messung der beiden Vergleichsstellentemperaturen ϑ2 und ϑ3 an der Vergleichsstelle 24 des ersten Thermoelementleiters 7 bzw. der Vergleichsstelle 25 des zweiten Thermoelementleiters 8, welche an den beiden Kontaktmittel 1 und 2 angeschlossen sind, ist ein Teil eines Temperaturaufnahmebereichs 11 des ersten Temperaturaufnehmers 10 an das erste Kontaktmittel 1 und ein Teil eines Temperaturaufnahmebereichs 15 des zweiten Temperaturaufnehmers 14 an das zweite Kontaktmittel 2 angefügt.

Der erste Temperaturaufnehmer 10 und der zweite Temperaturaufnehmer 14 sind jeweils mit einem den Temperaturaufnehmer 10 oder 14 zumindest teilweise umhüllenden Keramikkörper 18 bzw. 18' versehen, so dass die beiden Temperaturaufnahmebereiche 11 und 15 des Temperaturaufnehmers 10 bzw. des Temperaturaufnehmers 14 durch einen Teil der umhüllenden Keramik 18 bzw. 18' ausgebildet werden. Die Oberflächen der beiden Temperaturaufnahmebereiche 11 und 15 in Fig.5 zeigen wiederum in die Zeichenebene hinein. Ein Teil des Temperaturaufnahmebereichs 11 des ersten Temperaturaufnehmers 10 ist mittels einer Fügeverbindung 27 an das erste Kontaktmittel 1 und ein Teil des Temperaturaufnahmebereichs 15 des zweiten Temperaturaufnehmers 14 ist mittels einer Fügeverbindung 27' an das zweite Kontaktmittel 2 wärmeleitend angefügt. Die Fügeverbindungen sind wiederum zweckmäßig Klebeverbindungen. Infolgedessen sind das erste und das zweite Kontaktmittel 1 und 2 galvanisch voneinander getrennt und es erfolgt kein Temperaturausgleich zwischen den beiden Kontaktmitteln 1 und 2.

Zum Abgriff des elektrischen Kennwertes der Vergleichsstellentemperaturmessung mit dem Temperaturaufnehmer 10 bzw. mit dem Temperaturaufnehmer 14 sind deren beide elektrischen Kontakte 12 und 13 bzw. 16 und 17 aus dem Steckverbindergehäuse heraus geführt.

Zusammenfassend hat sich somit in der Praxis für die Erfindung eine Fügeverbindung als besonders vorteilhaft erwiesen, die zwischen einem Kontaktmittel und dem Teil des Temperaturaufnahmebereichs eines Temperaturaufnehmers, welches an dieses Kontaktmittel gefügt ist, ausschließlich den Wärmeübergang an der hierbei durch Aneinanderfügung entstehenden Grenzschicht verbessernde Schichtelemente zulässt, wie beispielsweise Wärmeleitpasten oder andere für die Wärmeleitung vorteilhafte mechanische Schichtelemente, und/oder für die Fügeverbindung notwendige Fügemittel, wie beispielsweise Klebstoffe, Schweiß- oder Lötmittel, Schraub- oder Nietverbindungen, zulässt, und/oder Mittel zulässt, welche eine elektrische Isolation ermöglichen, so dass der Temperaturaufnahmebereich des Temperaturaufnehmers von dem Kontaktmittel galvanisch getrennt ist. Der an das Kontaktmittel angefügte, und also insbesondere unmittelbar angefügte Teil des Temperaturaufnahmebereichs befindet sich folglich an dem selben Material, an dem auch der Thermoelementleiter angeschlossen ist.

In Abwandlung zu den vorbeschriebenen Ausführungsformen, bei denen mindestens ein Teil eines Temperaturaufnehmers von einer Keramik, umgeben ist, welche in diesem Fall mindestens einen Teil des Temperaturaufnahmebereichs dieses Temperaturaufnehmers ausbildet, können auch andere Schutzschichten und/oder wärmeleitfähige Materialschichten eingesetzt werden.
Ferner sei darauf hingewiesen, dass die Erfindung nicht auf die Ausbildung eines Temperaturaufnahmebereichs durch eine umhüllende Keramik beschränkt ist. So kann der Temperaturaufnahmebereich eine beliebige Gestalt und eine beliebig große Messfläche aufweisen und direkt Teil eines Temperaturaufnehmers sein, der zur Messung der Oberflächentemperatur an wenigstens einem Kontaktmittel des erfindungsgemäßen Steckverbinders geeignet ist. Ferner kann der Temperaturaufnahmebereich des Temperaturaufnehmers z.B. einen Teil oder einen Abschnitt der Gesamtoberfläche des Temperaturaufnehmer einnehmen, oder der Temperaturaufnahmebereich wird durch die gesamte äußere Oberfläche des Temperaturaufnehmers ausgebildet.

### Bezugszeichenliste:

- 1: Erstes Kontaktmittel
- 2: Zweites Kontaktmittel
- 3: Drittes Kontaktmittel
- 4: Viertes Kontaktmittel
- 5: Fünftes Kontaktmittel
- 6: Sechstes Kontaktmittel
- 7: Erster Thermoelementleiter
- 8: Zweiter Thermoelementleiter
- 9: Elektrische Schaltungsanordnung
- 10: Erster elektrischer Temperaturaufnehmer
- 11: Temperaturaufnahmebereich des ersten Temperaturaufnehmers
- 12: Erster elektrischer Kontakt des ersten Temperaturaufnehmers
- 13: Zweiter elektrischer Kontakt des ersten Temperaturaufnehmers
- 14: Zweiter elektrischer Temperaturaufnehmer
- 15: Temperaturaufnahmebereich des zweiten Temperaturaufnehmers
- 16: Erster elektrischer Kontakt des zweiten Temperaturaufnehmers
- 17: Zweiter elektrischer Kontakt des zweiten Temperaturaufnehmers
- 18: Keramikkörper
- 19: Schraubenklemme
- 20: Klemmschraube
- 21: Steckverbindergehäuse
- 21a: Gehäusedeckel
- 22: Steckbuchse
- 23: Messstelle
- 24: Vergleichsstelle des ersten Thermoelementleiters
- 25: Vergleichsstelle des zweiten Thermoelementleiters
- 26: Kontaktmittel der Steckbuchse
- 27: Fügeverbindung

## Patentansprüche

1. Elektrischer Steckverbinder zum elektrischen Anschluss von wenigstens einem ersten und einem zweiten Thermoelementleiter (7, 8), umfassend
- wenigstens ein elektrisch leitfähiges erstes und zweites Kontaktmittel (1, 2), wobei der erste Thermoelementleiter (7) an das erste Kontaktmittel (1) und der zweite Thermoelementleiter (8) an das zweite Kontaktmittel (2) anzuschließen ist,
- wenigstens einen ersten elektrischen Temperaturaufnehmer (10), welcher mit einem Temperaturaufnahmebereich (11) und mit wenigstens einem ersten und einem zweiten elektrischen Kontakt (12, 13) versehen ist, **dadurch gekennzeichnet, dass**
der Temperaturaufnahmebereich (11) des ersten Temperaturaufnehmers (10) durch einen Teil oder einen Abschnitt der Gesamtoberfläche des Temperaturaufnehmers (10) oder durch die gesamte äußere Oberfläche des Temperaturaufnehmers (10) ausgebildet ist und wobei wenigstens ein Teil des Temperaturaufnahmebereichs (11) des ersten Temperaturaufnehmers (10) an das erste Kontaktmittel (1) durch eine Fügeverbindung (27) angefügt ist und wenigstens ein Teil des Temperaturaufnahmebereichs (11) des ersten Temperaturaufnehmers (10) an das zweite Kontaktmittel (2) durch eine Fügeverbindung angefügt ist.

2. Elektrischer Steckverbinder gemäß Anspruch 1, wobei der Temperaturaufnahmebereich (11) des zumindest ersten Temperaturaufnehmers (10) an das erste und/oder zweite Kontaktmittel (1, 2) wärmeleitend angefügt ist und/oder von dem ersten und/oder zweiten
Kontaktmittel (1, 2) galvanisch getrennt ist.

3. Elektrischer Steckverbinder gemäß einem der vorbenannten Ansprüche, wobei wenigstens ein Teil eines Temperaturaufnahmebereichs (15) eines zweiten Temperaturaufnehmers (14) an das zweite Kontaktmittel (2) durch eine Fügeverbindung angefügt ist.

4. Elektrischer Steckverbinder gemäß einem der vorbenannten Ansprüche, wobei der erste Thermoelementleiter (7) mit dem ersten Kontaktmittel (1) und der zweite Thermoelementleiter (8) mit dem zweiten Kontaktmittel (2) elektrisch verbunden ist.

5. Elektrischer Steckverbinder gemäß einem der vorbenannten Ansprüche, wobei der erste elektrische Kontakt (12) des ersten Temperaturaufnehmers (10) an ein elektrisch leitfähiges drittes Kontaktmittel (3) elektrisch angeschlossen ist.

6. Elektrischer Steckverbinder Anspruch 5, wobei der zweite elektrische Kontakt (12) des ersten Temperaturaufnehmers (10) an das erste Kontaktmittel (1) elektrisch angeschlossen ist.

7. Elektrischer Steckverbinder gemäß Anspruch 5, wobei der zweite elektrische Kontakt (13) des ersten Temperaturaufnehmers (10) an ein elektrisch leitfähiges viertes Kontaktmittel (4) elektrisch angeschlossen ist.

8. Elektrischer Steckverbinder gemäß Anspruch 3 und 7, wobei ein erster elektrischer Kontakt (16) des zweiten Temperaturaufnehmers (14) an ein elektrisch leitfähiges fünftes Kontaktmittel (5) und ein zweiter elektrischer Kontakt (17) des zweiten Temperaturaufnehmers (14) an ein elektrisch leitfähiges sechstes Kontaktmittel (6) elektrisch angeschlossen sind.

9. Elektrischer Steckverbinder gemäß einem der vorbenannten Ansprüche, wobei der erste und weitere Temperaturaufnehmer (10, 14) als temperaturabhängige Widerstände ausgebildet sind.

10. Elektrischer Steckverbinder gemäß einem der vorbenannten Ansprüche, wobei wenigstens ein Teil des ersten und/oder weiterer Temperaturaufnehmer (10, 14) wärmeleitend und/oder von wenigstens einem wärmeleitenden Keramikkörper (18) umhüllt ist, wobei der Keramikkörper (18) zum Temperaturausgleich zwischen dem ersten und dem zweiten Kontaktmittel (1, 2) dient und wenigstens einen Temperaturaufnahmebereich (11, 15) ausbildet.

11. Verfahren zur Herstellung eines elektrischen Steckverbinders gemäß einem der vorbenannten Ansprüche, **dadurch gekennzeichnet, dass** zumindest Teile des Temperaturaufnahmebereichs (11) des ersten Temperaturaufnehmers (10) mittels eines Fügeverfahrens an das erste und zweite Kontaktmittel (1, 2) angefügt werden.

12. Verfahren zur Herstellung eines elektrischen Steckverbinders gemäß Anspruch 11, wobei ein stoffschlüssiges Fügeverfahren, insbesondere eine Verklebung, angewendet wird.

13. Verfahren zur Herstellung eines elektrischen Steckverbinders gemäß Anspruch 12, wobei die Klebeverbindung mittels eines wärmeleitenden und/oder elektrisch isolierenden Klebstoffs ausgeführt wird.

14. Verfahren zur Herstellung eines elektrischen Steckverbinders gemäß der Ansprüche 11 bis 13, wobei zumindest auf einen Teil der Oberfläche des Temperaturaufnahmebereichs (11) des ersten Temperaturaufnehmers (10), welcher an das erste Kontaktmittel (1) angefügt wird, vor Durchführung des Fügeverfahrens eine Wärmeleitpaste aufgetragen wird.

## Claims

1. An electrical connector for electrically connecting at least a first and a second thermocouple conductor (7, 8), comprising
- at least one electrically conductive first and second contact means (1, 2), wherein the first thermocouple conductor (7) is to be connected to the first contact means (1) and the second thermocouple conductor (8) is to be connected to the second contact means (2);
- at least a first electrical temperature sensor (10) having a temperature pick-up area (11) and at least first and second electrical terminals (12, 13);
**characterized in that**
the temperature pick-up area (11) of the first temperature sensor (10) is defined by a part or a portion of the overall surface of the temperature sensor (10) or by the entire outer surface of the temperature sensor (10); and wherein
at least a portion of the temperature pick-up area (11) of the first temperature sensor (10) is joined to the first contact means (1) by a joint connection (27), and at least part of the temperature pick-up area (11) of the first temperature sensor (10) is joined to the second contact means (2) by a joint connection.

2. The electrical connector according to claim 1, wherein the temperature pick-up area (11) of the at least first temperature sensor (10) is joined to the first and/or second contact means (1, 2) in heat-conducting manner and/or is galvanically isolated from the first and/or second contact means (1, 2).

3. The electrical connector according to any one of the preceding claims, wherein at least a portion of a temperature pick-up area (15) of a second temperature sensor (14) is joined to the second contact means (2) by a joint connection.

4. The electrical connector according to any one of the preceding claims, wherein the first thermocouple conductor (7) is electrically connected to the first contact means (1) and the second thermocouple conductor (8) to the second contact means (2).

5. The electrical connector according to any one of the preceding claims, wherein the first electrical terminal (12) of the first temperature sensor (10) is electrically connected to an electrically conductive third contact means (3).

6. The electrical connector according to claim 5, wherein the second electrical terminal (12) of the first temperature sensor (10) is electrically connected to the first contact means (1).

7. The electrical connector according to claim 5, wherein the second electrical terminal (13) of the first temperature sensor (10) is electrically connected to an electrically conductive fourth contact means (4).

8. The electrical connector according to claim 3 and 7, wherein a first electrical terminal (16) of the second temperature sensor (14) is electrically connected to an electrically conductive fifth contact means (5), and a second electrical terminal (17) of the second temperature sensor (14) is electrically connected to an electrically conductive sixth contact means (6).

9. The electrical connector according to any one of the preceding claims, wherein the first and further temperature sensors (10, 14) are implemented as temperature-dependent resistors.

10. The electrical connector according to any one of the preceding claims, wherein at least a portion of the first and/or further temperature sensors (10, 14) is thermally conductive and/or is enveloped by at least one thermally conductive ceramic body (18), the ceramic body (18) serving for temperature equalisation between the first and second contact means (1, 2) and defines at least one temperature pick-up area (11, 15).

11. A method for producing an electrical connector according to any one of the preceding claims, **characterized in that** at least portions of the temperature pick-up area (11) of the first temperature sensor (10) are joined to the first and second contact means (1, 2) by a joining process.

12. The method for producing an electrical connector according to claim 11, wherein a material-bonding joining process is applied, in particular adhesive bonding.

13. The method for producing an electrical connector according to claim 12, wherein the adhesive bonding is made using a thermally conductive and/or electrically insulating adhesive.

14. The method for producing an electrical connector according to claims 11 to 13, wherein, before performing the joining process, a thermal paste is applied to at least a portion of the surface of the temperature pick-up area (11) of the first temperature sensor (10), which is joined to the first contact means (1).

## Revendications

1. Connecteur électrique pour le raccordement électrique d'au moins un premier et un deuxième conducteur de thermo-couple (7, 8), comportant :
- au moins un premier et un deuxième moyen de contact (1, 2) électro-conducteur, où le premier conducteur de thermo-couple (7) est à raccorder au premier moyen de contact (1) et le deuxième conducteur de thermo-couple (8) est à raccorder au deuxième moyen de contact (2),
- au moins un premier capteur de température électrique (10), lequel est pourvu d'une zone de mesure de température (11) et d'au moins un premier et un deuxième contact électrique (12, 13), **caractérisé en ce que**
la zone de mesure de température (11) du premier capteur de température (10) est formée par une partie ou une section de la surface totale du capteur de température (10) ou par toute la surface extérieure du capteur de température (10) et où
au moins une partie de la zone de mesure de température (11) du premier capteur de température (10) est accolée au premier moyen de contact (1) par l'intermédiaire d'un assemblage (27) et au moins une partie de la zone de mesure de température (11) du premier capteur de température (10) est accolée au deuxième moyen de contact (2) par l'intermédiaire d'un assemblage.

2. Connecteur électrique selon la revendication 1, dans lequel la zone de mesure de température (11) de l'au moins premier capteur de température (10) est accolée au premier et/ou deuxième moyen de contact (1, 2) de manière thermo-conductrice et/ou est séparée galvaniquement du premier et/ou deuxième moyen de contact (1, 2).

3. Connecteur électrique selon l'une quelconque des revendications précédentes, dans lequel au moins une partie d'une zone de mesure de température (15) d'un deuxième capteur de température (14) est accolé au deuxième moyen de contact (2) par l'intermédiaire d'un assemblage.

4. Connecteur électrique selon l'une quelconque des revendications précédentes, dans lequel le premier conducteur de thermo-couple (7) est relié électriquement au premier moyen de contact (1) et le deuxième conducteur de thermo-couple (8) est relié électriquement au deuxième moyen de contact (2).

5. Connecteur électrique selon l'une quelconque des revendications précédentes, dans lequel le premier contact électrique (12) du premier capteur de température (10) est raccordé électriquement à un troisième moyen de contact (3) électro-conducteur.

6. Connecteur électrique selon la revendication 5, dans lequel le deuxième contact électrique (12) du premier capteur de température (10) est raccordé électriquement au premier moyen de contact (1).

7. Connecteur électrique selon la revendication 5, dans lequel le deuxième contact électrique (13) du premier capteur de température (10) est raccordé électriquement à un quatrième moyen de contact (4) électro-conducteur.

8. Connecteur électrique selon la revendication 3 et 7, dans lequel un premier contact électrique (16) du deuxième capteur de température (14) est raccordé électriquement à un cinquième moyen de contact (5) électro-conducteur et un deuxième contact électrique (17) du deuxième capteur de température (14) est raccordé électriquement à un sixième moyen de contact (6) électro-conducteur.

9. Connecteur électrique selon l'une quelconque des revendications précédentes, dans lequel le premier et les autres capteurs de température (10, 14) sont réalisés sous la forme de résistances dépendant de la température.

10. Connecteur électrique selon l'une quelconque des revendications précédentes, dans lequel au moins une partie du premier et/ou des autres capteurs de température (10, 14) est thermo-conductrice et/ou enveloppée d'au moins un corps céramique (18) thermo-conducteur, où le corps céramique (18) sert à équilibrer la température entre le premier et le deuxième moyen de contact (1, 2) et forme au moins une zone de mesure de température (11, 15).

11. Procédé pour la fabrication d'un connecteur électrique selon l'une quelconque des revendications précédentes, **caractérisé en ce qu'**au moins des parties de la zone de mesure de température (11) du premier capteur de température (10) sont accolées au premier et au deuxième moyen de contact (1, 2) au moyen d'un procédé d'assemblage.

12. Procédé pour la fabrication d'un connecteur électrique selon la revendication 11, dans lequel un procédé d'assemblage par liaison de matières, en particulier un collage, est appliqué.

13. Procédé pour la fabrication d'un connecteur électrique selon la revendication 12, dans lequel la liaison adhésive est réalisée au moyen d'un adhésif thermo-conducteur et/ou électriquement isolant.

14. Procédé pour la fabrication d'un connecteur électrique selon les revendications 11 à 13, dans lequel une pâte thermo-conductrice est appliquée avant la mise en oeuvre du procédé d'assemblage au moins sur une partie de la surface de la zone de mesure de température (11) du premier capteur de température (10), laquelle est accolée au premier moyen de contact (1).
